# EUROPEAN PATENT APPLICATION

(11) **EP 2 735 464 A1**
(43) Date of publication of application: **28.05.2014**
(21) Application number: 13192507.5
(22) Date of filing: 12.11.2013
(51) Int. Cl.: B60K 35/00, B60K 37/02, G01D 13/22, G01D 13/04

(54) **Reconfigurable instrument cluster assembly with a mechanical pointer**

(30) Priority: 26.11.2012 US 201213684640
(71) Applicant: Delphi Technologies, Inc., Troy MI 48007 (US)
(72) Inventor: Blackmer, Stephen C., Millington, MI Michigan 48746 (US)
(74) Representative: Robert, Vincent

(57) **Abstract**

An instrument cluster assembly (12) suitable for installation into a vehicle (10) to display information to an operator (14) of the vehicle (10). The assembly (12) includes a reconfigurable display (20), a substrate (24), and a pointer (26). The reconfigurable display (20) is configured to display an image (22). The substrate (24) is movably supported over at least a portion of the display (20). The substrate (24) is formed of material characterized as sufficiently transparency to see the image (22) through the substrate (24). The pointer (26) is fixedly coupled to the substrate (24) such that movement of the substrate (24) is effective to orient the pointer (26) to indicate a feature of the image (22) to the operator (14).

## Description

### TECHNICAL FIELD OF INVENTION

This disclosure generally relates to an instrument cluster assembly or display assembly suitable for installation, and more particularly relates to an assembly that includes a substrate with a pointer movably supported over a reconfigurable display.

### BACKGROUND OF INVENTION

Traditional vehicle instrument panel needle indicators or gauge pointers that are positioned or rotated about an axis are known. Such traditional needle indicators are typically rotated by a permanent magnet attached to a shaft that is coupled to the pointer and located at the axis. The permanent magnet is typically urged to some angle by an electromagnet.

Reconfigurable instrument panels that use flat display technology such as arrays of light emitting diodes (i.e. LED display) or liquid crystal devices (i.e. LCD display) have been introduced. However, the appearance of such flat, two-dimensional displays are not aesthetically pleasing to some customers as the traditional needle indicator type displays. It has been proposed that the reconfigurable display be overlaid with a needle indicator. However, the permanent magnet and electromagnet undesirably obstruct too much of the reconfigurable display proximate to the axis. It has also been proposed that the permanent magnet and electromagnet be located behind the reconfigurable display, and the shaft extended through the reconfigurable display. However, this requires providing a hole through the reconfigurable display that makes manufacturing of the reconfigurable display undesirable complicated and costly.

### SUMMARY OF THE INVENTION

In accordance with one embodiment, an instrument cluster assembly suitable for installation into a vehicle to display information to an operator of the vehicle is provided. The assembly includes a reconfigurable display, a substrate, and a pointer. The reconfigurable display is configured to display an image. The substrate is movably supported over at least a portion of the display. The substrate is formed of material characterized as sufficiently transparency to see the image through the substrate. The pointer is fixedly coupled to the substrate such that movement of the substrate is effective to orient the pointer to indicate a feature of the image to the operator.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a vehicle interior equipped with an instrument cluster assembly in accordance with one embodiment; and
Fig. 2 is a cut-away front view of the instrument cluster assembly of Fig. 1 in accordance with one embodiment.

### DETAILED DESCRIPTION

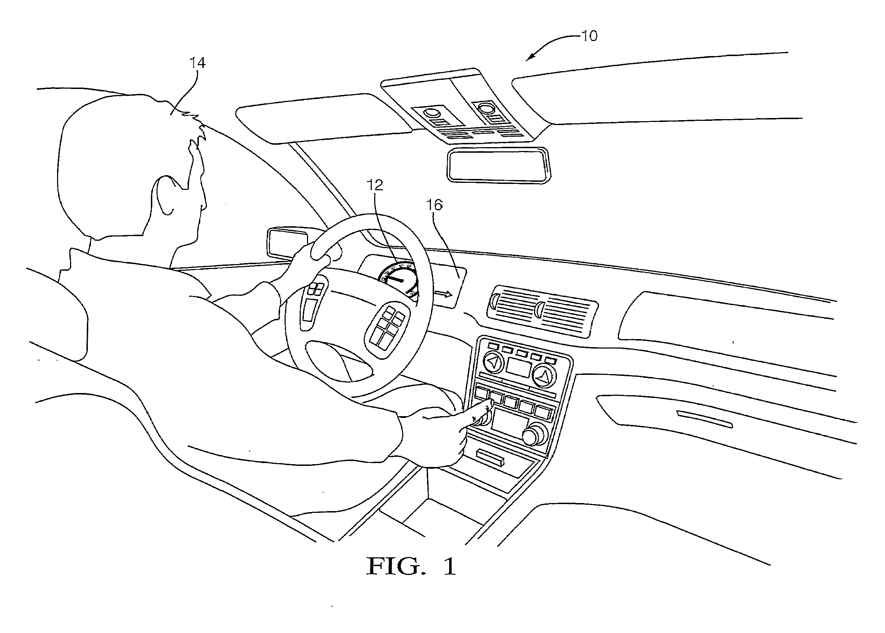

Fig. 1 illustrates a non-limiting example of a vehicle 10 equipped with an instrument cluster assembly, hereafter the assembly 12, installed into a dashboard 16 of the vehicle 10. In general, the assembly 12 displays information to an operator 14 of the vehicle 10 such as vehicle speed, engine coolant temperature, and the like.

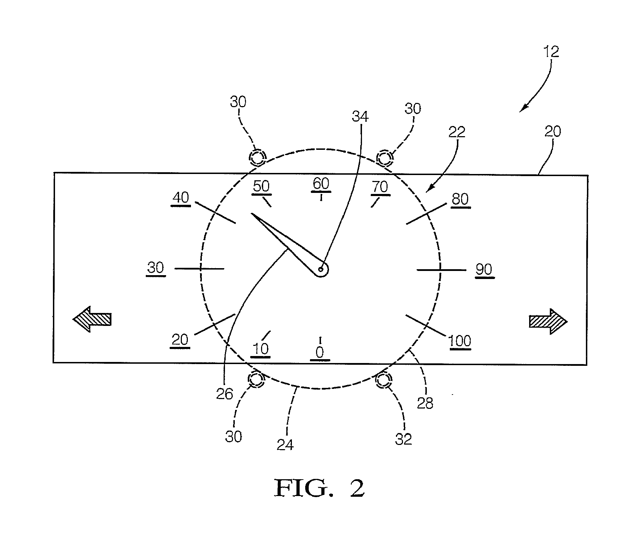

Fig. 2 illustrates a non-limiting example of some of the parts of the assembly 12. Some features normally found in such assemblies are not illustrated only to simplify the explanation. Those in the art will recognize that other parts such as a housing, circuit board assembly, transparent cover, fasteners, and the like are necessary to form an instrument cluster assembly suitable for installation into a vehicle.

The assembly includes a reconfigurable display, hereafter the display 20. The display may be a liquid crystal device (LCD) type display, or an organic light emitting diode (OLED) type display, or any other type of display that can display an image 22. In this example, the image 22 is illustrated as an arrangement of numbers or indicia that may correspond to vehicle speed, and symbols that may be variably illuminated to indicate that a turn signal indicator of the vehicle 10 is activated. Other known forms of information are contemplated such as engine coolant temperature, fuel level, an odometer, and the like. Having a reconfigurable display as part of the assembly is advantageous as what information is displayed can be readily changed. For example, the operator 14 may select from several configurations by pressing a button as suggested in Fig. 1.

In order to fulfill an aesthetic desire that the assembly 12 to have a movable pointer, but avoid the undesirable complexities of providing a hole in the display 20, the assembly 12 includes a substrate 24 movably supported over at least a portion of the display 20. As used herein, characterizing the substrate 24 as movably supported over the display 20 means that the substrate 24 can move relative to the display 20 in a manner and for reasons that will become apparent in the explanation that follows. In general, the substrate 24 is formed of material that is sufficiently transparency to see the image 22 on the display 20 through the substrate 24. Preferably, the substrate is clear so that the substrate 24 is not noticeable by the operator 14. The substrate 24 may be formed of, for example, glass or a transparent polymeric compound.

The assembly 12 includes a pointer 26 fixedly coupled to the substrate 24. The pointer 26 may be a separate part formed of metal or polymeric compound, for example. Alternatively, the pointer 26 may be integrally formed with the substrate by injection molding, surface etching and coloring, or any number of known ways to permanently mark the substrate 24 with a shape suitable for use as the pointer 26. In general, the pointer 26 is coupled to the substrate 24 such that movement of the substrate 24 is effective to orient the pointer 26 to indicate a feature of the image 22 to the operator, such as indicate vehicle speed. By way of example and not limitation, if the substrate 24 is shaped like a circular plate, the substrate defines a center 34, and the pointer 26 may be oriented to move about the center 34.

In one embodiment, the substrate 24 is a circular plate. The substrate 24 defines a perimeter 28 that can be used to make supporting contact with the substrate 24 outside of the area occupied by the display 20, and so avoid making the display 20 undesirably complicated. By way of example and not limitation, the substrate 24 may be supported by a plurality of rollers 30 configured to contact the perimeter 28 in a manner effective to support the substrate 24. The circular shape allows the substrate 24 to rotate in order to variably orient the pointer 26, and thereby allow the pointer to indicate some feature or character on the display 20.

In order to orient the substrate 24, the assembly 12 may include a drive wheel 32 coupled to the substrate 24 in a manner effective to rotate the substrate 24. By way of example and not limitation, the drive wheel 32 may contact the perimeter 28 of the substrate 24. The drive wheel 32 may be coupled to a motor (not shown), for example a brushless direct current (DC) motor, or a brushless stepper motor, or other device suitable to rotate and control the position of the drive wheel 32. Such types of motors are commercially available, and the means to control the position of the motor so that the substrate 24 can be rotated to a particular orientation and thereby control the orientation of the pointer 26 is well known in the art.

The drive wheel 32 may include a material at the point of contact with the substrate that provides a frictional contact, a soft rubber compound for example. Alternatively, the drive wheel 32 may include gear-teeth (not shown) that mate with gear-teeth (not shown) on the perimeter 28 to reduce the change of slippage between the substrate 24 and the drive wheel 32.

The assembly 12 may include a trim piece (not shown) configured to hide the rollers 30 and the drive wheel 32 so that only the image 22 on the display can be seen by the operator. The assembly may also include a tinted lens cover configured to cover the display 20 and the substrate 24 so that the perimeter 28 is not detected easily by the operator 14.

Accordingly, an instrument cluster assembly (the assembly 12) is provided. The assembly 12 includes a substrate 24 equipped with a pointer 26 that can be oriented to indicate a feature of an image 22 on a display 20. The display 20 is reconfigurable so that, for example, numbers in the image 22 can be changed from corresponding to vehicle speed to corresponding to engine speed, and so the pointer 26 can alternatively serve as a speedometer or a tachometer.

While this invention has been described in terms of the preferred embodiments thereof, it is not intended to be so limited, but rather only to the extent set forth in the claims that follow.

## Claims

1. An instrument cluster assembly (12) suitable for installation into a vehicle (10) to display information to an operator (14) of the vehicle (10), said assembly (12) comprising:
a reconfigurable display (20) configured to display an image (22);
a substrate (24) movably supported over at least a portion of the display (20), said substrate (24) formed of material characterized as sufficiently transparency to see the image (22) through the substrate (24); and
a pointer (26) fixedly coupled to the substrate (24) such that movement of the substrate (24) is effective to orient the pointer (26) to indicate a feature of the image (22) to the operator (14).

2. The assembly (12) in accordance with claim 1, wherein the substrate (24) is a circular plate.

3. The assembly (12) in accordance with claim 2, wherein the substrate (24) defines a perimeter (28), and the assembly (12) further comprises a plurality of rollers (30) configured to contact the perimeter (28) in a manner effective to support the substrate (24) and allow the substrate (24) to rotate.

4. The assembly (12) in accordance with claim 2, wherein the assembly (12) further comprises a drive wheel (32) coupled to the substrate (24) in a manner effective to rotate the substrate (24).

5. The assembly (12) in accordance with claim 4, wherein the drive wheel (32) contacts the perimeter (28) of the substrate (24).

6. The assembly (12) in accordance with claim 2, wherein the circular plate defines a center (34), and the pointer (26) is oriented to move about the center (34).

7. The assembly (12) in accordance with claim 1, wherein the display (20) comprises a liquid crystal device (LCD).
